# EUROPEAN PATENT APPLICATION

(11) **EP 4 566 845 A1**
(43) Date of publication of application: **11.06.2025**
(21) Application number: 24214216.4
(22) Date of filing: 20.11.2024
(51) Int. Cl.: B60C 13/00

(54) **TIRE**

(30) Priority: 05.12.2023 JP 2023205552
(71) Applicant: Sumitomo Rubber Industries, Ltd., Kobe-shi, Hyogo 651-0072 (JP)
(72) Inventor: OKABAYASHI, Shiho, Kobe-shi, 651-0072 (JP); KITAMURA, Yukako, Kobe-shi, 651-0072 (JP); HASSELMEYER, Jens, 63456 Hanau (DE); LEENDERTSE, Jaap, 63456 Hanau (DE); KNISPEL, Oliver, 63456 Hanau (DE); KUNKEL, Daniel, 63456 Hanau (DE)
(74) Representative: Manitz Finsterwald Patent- und Rechtsanwaltspartnerschaft mbB

(57) **Abstract**

Provided is a tire that can improve the outer appearance of a sidewall portion. The tire has a plurality of unit patterns 11 arranged on a sidewall portion 3. Each of the unit patterns 11 includes a plurality of rising portions 7 rising from a reference surface 6. The plurality of rising portions 7 include a first rising portion 13, a second rising portion 14 connected at one end thereof to the first rising portion 13, and a plurality of connecting rising portions 15 connecting the first rising portion 13 and the second rising portion 14. The first rising portion 13 and the second rising portion 14 extend in an arc shape. The plurality of connecting rising portions 15 include a plurality of first intersections connected to the first rising portion 13 and are formed by ridges 8. The plurality of first intersections are separated from each other.

## Description

### BACKGROUND OF THE INVENTION

### Field of the Invention

The present invention relates to a tire.

### Background Art

Japanese Laid-Open Patent Publication No. 2021-084449 describes a tire having a pattern portion provided on a sidewall portion. The pattern portion includes an outer pattern and an inner pattern. The outer pattern includes a plurality of outer ridges disposed concentrically around a first point on the outer side in the tire radial direction and extending toward a second point, on a line in the tire circumferential direction, which is different from the first point. The inner pattern includes a plurality of inner ridges disposed concentrically around the second point on the inner side in the tire radial direction and extending toward the first point. Each of the outer ridges is connected to one of the inner ridges.

The decorative pattern described above has, for example, an effect (hereinafter sometimes referred to as "camouflaging effect") of camouflaging, by utilizing contrast of light, molding defects appearing as projections and recesses such as bulges and dents which tend to be generated on the surface of the sidewall portion, thereby improving the outer appearance of the sidewall portion.

In recent years, there has been a demand for further improving the outer appearance of the sidewall portion by making such a decorative pattern conspicuous.

The present invention has been made in view of the above circumstances, and a main object of the present invention is to provide a tire that can improve the outer appearance of a sidewall portion.

### SUMMARY OF THE INVENTION

The present invention is directed to a tire including a pair of sidewall portions, wherein a decorative portion having a plurality of unit patterns arranged therein is formed on at least one of the pair of sidewall portions, each of the plurality of unit patterns includes a plurality of rising portions rising from a reference surface and each formed by a ridge or a wall surface, the plurality of rising portions include a first rising portion extending in an arc shape, a second rising portion connected at one end thereof to the first rising portion and extending in an arc shape, and a plurality of connecting rising portions connecting the first rising portion and the second rising portion, the plurality of connecting rising portions include a plurality of first intersections connected to the first rising portion and are each formed by the ridge, and the plurality of first intersections are separated from each other.

As a result of adopting the above-described configuration, the tire of the present invention can improve the outer appearance of the sidewall portion.

### BRIEF DESCRIPTION OF THE DRAWINGS

FIG. 1 is a tire meridian cross-sectional view of a right half of a tire of one embodiment of the present invention;
FIG. 2 is a plan view of a decorative portion;
FIG. 3(A) is a cross-sectional view taken along a line A-A in FIG. 2;
FIG. 3(B) is a plan view of a unit pattern;
FIG. 4 is a plan view of the unit pattern;
FIG. 5 is a plan view of a pattern group;
FIG. 6 is a perspective view of the pattern group;
FIG. 7 is an enlarged view of FIG. 5;
FIG. 8 is a plan view of a decorative portion of another embodiment;
FIG. 9(A) is a plan view of a pattern group in FIG. 8;
FIG. 9(B) is a plan view of a pattern group of still another embodiment;
FIG. 10(A) is a plan view of a pattern group of still another embodiment;
FIG. 10(B) is a plan view of a pattern group of still another embodiment;
FIG. 11(A) is a plan view of a pattern group of still another embodiment;
FIG. 11(B) is a plan view of a pattern group of still another embodiment;
FIG. 12(A) is a plan view of a pattern group of still another embodiment; and
FIG. 12(B) is a plan view of a pattern group of still another embodiment.

### DETAILED DESCRIPTION

Hereinafter, an embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

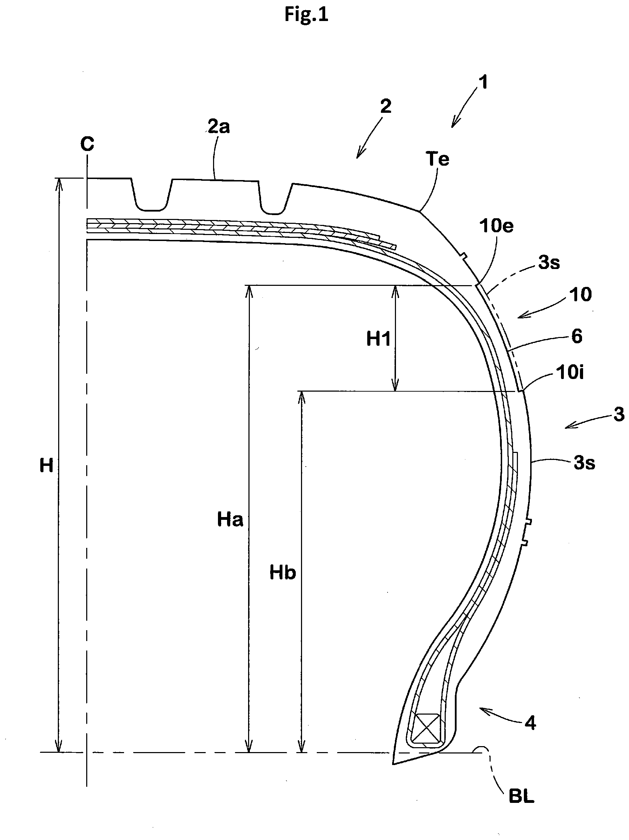

FIG. 1 is a tire meridian cross-sectional view, of a right half of a tire 1 showing one embodiment of the present invention, including a tire rotation axis (not shown). In FIG. 1, a pneumatic tire for a passenger car is shown as a preferred embodiment. However, the present invention may also be applied to a pneumatic tire for a light truck, a pneumatic tire for a heavy-duty vehicle, and a non-pneumatic tire the interior of which is not filled with pressurized air.

In the present specification, unless otherwise specified, dimensions and the like of components of the tire 1 are values measured in a standardized state. In the case where the tire 1 is a pneumatic tire, the "standardized state" is a state where the tire 1 is fitted on a standardized rim (not shown) and inflated to a standardized internal pressure and no load is applied to the tire 1.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 includes a pair of sidewall portions 3 (in FIG. 1, one of the sidewall portions 3 is shown). The tire 1 further includes a pair of bead portions 4 located inward of the pair of sidewall portions 3 in the tire radial direction, respectively (in FIG. 1, one of the bead portions 4 is shown), and a tread portion 2 connecting the pair of sidewall portions 3.

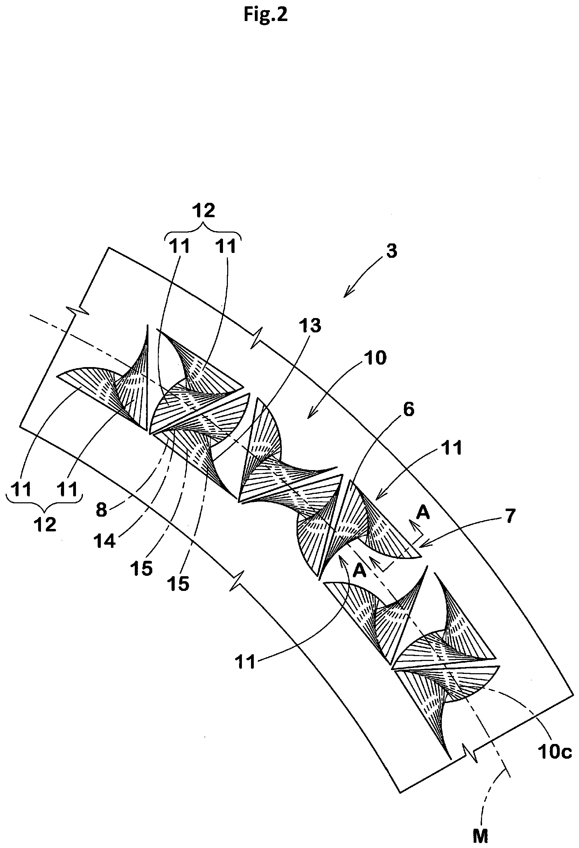

FIG. 2 is a partial plan view of the sidewall portion 3. As shown in FIG. 2, a decorative portion 10 having a plurality of unit patterns 11 arranged therein is formed on at least one of the pair of sidewall portions 3. In the tire 1 of the present embodiment, the decorative portion 10 is formed on only one of the pair of sidewall portions 3. The decorative portion 10 may be formed on each of the pair of sidewall portions 3.

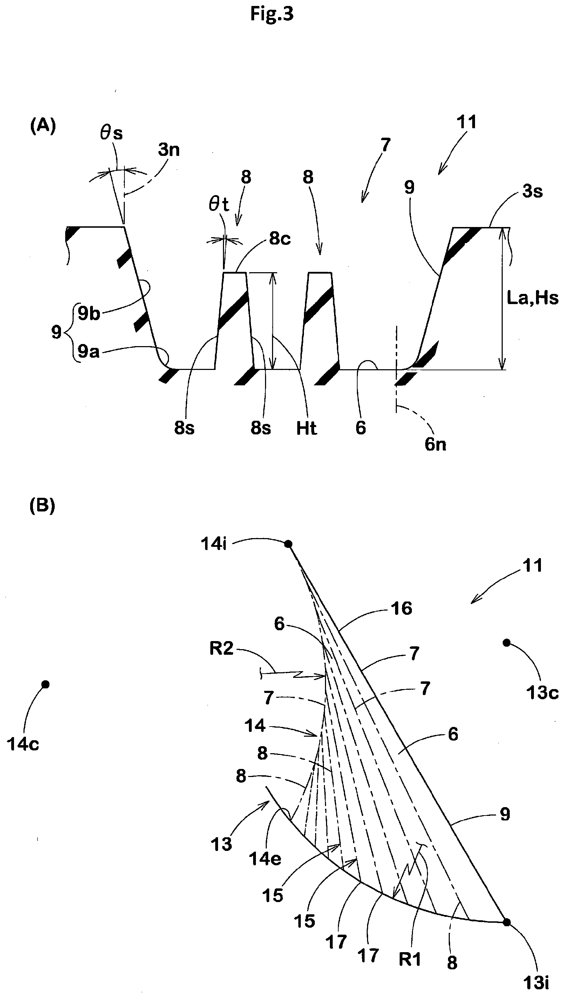

FIG. 3(A) is a cross-sectional view taken along a line A-A in FIG. 2. FIG. 3(B) is an enlarged view of one unit pattern 11 of the present embodiment. As shown in FIG. 2 to FIG. 3(B), each of the plurality of unit patterns 11 includes a plurality of rising portions 7 rising from a reference surface 6. Each rising portion 7 is formed from a ridge 8 or a wall surface 9. In a plan view of each unit pattern 11, each ridge 8 is shown by an alternate long and short dash line, and each wall surface 9 is shown by a solid line.

The plurality of rising portions 7 of each unit pattern 11 include a first rising portion 13, a second rising portion 14, and a connecting rising portion 15. The first rising portion 13 extends in an arc shape. The second rising portion 14 is connected at one end 14e thereof to the first rising portion 13 and extends in an arc shape. The connecting rising portion 15 connects the first rising portion 13 and the second rising portion 14. The connecting rising portion 15 is formed by the ridge 8. In each unit pattern 11, one first rising portion 13 and one second rising portion 14 are formed, and a plurality of connecting rising portions 15 are formed. Such a unit pattern 11 has an effect of camouflaging molding defects appearing as projections and recesses such as bulges and dents which tend to be generated on the surface of the sidewall portion 3. In the present specification, the "arc shape" includes not only an arc but also a shape that bends continuously to the left or right along the longitudinal direction thereof.

The plurality of connecting rising portions 15 include a plurality of first intersections 17 connected to the first rising portion 13. The plurality of first intersections 17 are separated from each other. Accordingly, at each first intersection 17, each of the plurality of connecting rising portions 15 is clearly distinguished, and occurrence of the molding defects appearing as projections and recesses is suppressed. Therefore, the tire 1 of the present invention has excellent sidewall portion outer appearance.

As shown in FIG. 1 and FIG. 3(A), in the present embodiment, the reference surface 6 is located inward of a sidewall reference profile 3s in the tire axial direction. The reference surface 6 is a surface extending substantially parallel to the sidewall reference profile 3s, for example. The "substantially parallel" means that a distance La in the direction of a normal line 6n of the reference surface 6 between the sidewall reference profile 3s and the reference surface 6 is the same at all positions on the reference surface 6, and also means that the distance La is the same at positions whose area is 80% or more of the area of the reference surface 6. In the present specification, the sidewall reference profile 3s is a surface of the sidewall portion 3 located on the outermost side in the tire axial direction, excluding local projections such as spews, bulges, and marks and an annular projection-recess portion extending continuously in the tire circumferential direction and having a small length in the tire radial direction. The sidewall reference profile 3s is connected to a tread end Te of the tread portion 2, for example. The sidewall reference profile 3s and the reference surface 6 are each formed as an arc that is convex outward in the tire axial direction.

In the case where the tire 1 is a pneumatic tire, the tread end Te is at a position, on the tire 1 on the outermost side in the tire axial direction, where the tire 1 is brought into contact with a flat surface in a standardized load-applied state. The standardized load-applied state is a state where a standardized load is applied to the tire 1 in the standardized state and the tire 1 is brought into contact with the flat surface at a camber angle of 0°. The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

In the present embodiment, each ridge 8 is formed with a transverse cross-section having a trapezoidal shape, more specifically, an isosceles trapezoidal shape. The ridge 8 includes, for example, a pair of side surfaces 8s extending in the longitudinal direction thereof and a top surface 8c connecting the outer ends in the tire axial direction of both side surfaces 8s. The top surface 8c of the present embodiment extends parallel to the reference surface 6. The ridge 8 is not limited to such a mode, and may have, for example, a transverse cross-section having a triangular, semi-elliptical, or rectangular shape.

In the present embodiment, the wall surface 9 is a surface connecting the reference surface 6 and the sidewall reference profile 3s and extending in the tire axial direction. The wall surface 9 extends outward in the tire axial direction continuously from the reference surface 6 to the sidewall reference profile 3s. In the present embodiment, the wall surface 9 is formed of an arc portion 9a extending from the reference surface 6 and having a radius of curvature of 0.2 to 0.5 mm and a straight portion 9b extending in a straight manner between the arc portion 9a and the sidewall reference profile 3s. An angle θs of the straight portion 9b with respect to a normal line 3n of the sidewall reference profile 3s is preferably not less than 20 degrees and further preferably not less than 25 degrees, and is preferably not greater than 40 degrees and further preferably not greater than 35 degrees.

In order to improve the visibility of the decorative portion 10 to improve the outer appearance of the sidewall portion 3, a length H1 in the tire radial direction of the decorative portion 10 is preferably not less than 10% and further preferably not less than 15% of a tire cross-sectional height H. A distance Ha in the tire radial direction between an outer end 10e in the tire radial direction of the decorative portion 10 and a bead base line BL is preferably not less than 70% and further preferably not less than 75% of the tire cross-sectional height H. Furthermore, a distance Hb in the tire radial direction between an inner end 10i in the tire radial direction of the decorative portion 10 and the bead base line BL is preferably not less than 35% and further preferably not less than 40% of the tire cross-sectional height H, and is preferably not greater than 65% and further preferably not greater than 60% of the tire cross-sectional height H. In the present specification, the bead base line BL is a line extending in the tire axial direction and passing through a rim diameter position defined by the standard on which the tire 1 is based. The tire cross-sectional height H is the distance in the tire radial direction from the bead base line BL to an outer surface 2a of the tread portion 2 at a tire equator position C.

As shown in FIG. 2, the decorative portion 10 overlaps a tire maximum width position M in the tire radial direction, for example. The tire maximum width position M is a region having the best visibility. Therefore, the decorative portion 10 of the present embodiment improves the outer appearance of the sidewall portion 3. In the present embodiment, a midpoint 10c in the tire radial direction of the decorative portion 10 coincides with the tire maximum width position M. In the present specification, the tire maximum width position M is a location where the sidewall reference profile 3s protrudes outward most in the tire axial direction.

The decorative portion 10 may be provided, for example, at a position overlapping marks, such as a manufacturer's name and a product name, which are provided on the sidewall portion 3, in the tire radial direction. In other words, the decorative portion 10 is provided so as to be displaced relative to the marks in the tire circumferential direction. The marks are formed as projections projecting outward in the tire axial direction from the sidewall reference profile 3s.

As shown in FIG. 3(B), each of the plurality of unit patterns 11 includes a third rising portion 16 connecting an end (other end) 13i of the first rising portion 13 and an end (other end) 14i of the second rising portion 14. The third rising portion 16 extends in a straight manner. Such a third rising portion 16 improves the outer appearance of the unit pattern 11. The third rising portion 16 and the plurality of connecting rising portions 15 are arranged without intersecting each other from the third rising portion 16 side toward the one end 14e side. Accordingly, the camouflaging effect on the molding defects is enhanced. In the present embodiment, the third rising portion 16 is formed by the wall surface 9. The "connecting the ends" includes not only the case where the end 13i or the end 14i and the third rising portion 16 are connected but also the case where the shortest separation distance between the end 13i or the end 14i and an end of the third rising portion 16 is 3 mm or less.

The first rising portion 13 is curved so as to be convex in a direction away from the third rising portion 16. In addition, the second rising portion 14 is curved so as to be convex toward the third rising portion 16. Such a first rising portion 13 and such a second rising portion 14 further enhance the effect of making the unit pattern 11 conspicuous. In the present embodiment, a center of curvature 14c of the second rising portion 14 is displaced relative to a center of curvature 13c of the first rising portion 13.

In the present embodiment, the first rising portion 13 and the second rising portion 14 are arcs having single radii of curvature R1 and R2, respectively. Such a first rising portion 13 and such a second rising portion 14 serve to improve the outer appearance. It is preferable that the radius of curvature R1 of the first rising portion 13 and the radius of curvature R2 of the second rising portion 14 are equal. Accordingly, the above-described effect is effectively exhibited. The "equal" means that the absolute value |R1 - R2| of the difference between the radius of curvature R1 and the radius of curvature R2 is 0 mm, and also includes a mode in which the ratio |R1 - R21/R of the absolute value |R1 - R2| to the larger one of the radius of curvature R1 and the radius of curvature R2 is 0.1.

The radius of curvature R1 and the radius of curvature R2 are preferably not less than 15 mm and further preferably not less than 17 mm, and are preferably not greater than 25 mm and further preferably not greater than 23 mm. Since the radius of curvature R1 and the radius of curvature R2 are not less than 15 mm, the design properties of the unit pattern 11 are maintained at a high level. Since the radius of curvature R1 and the radius of curvature R2 are not greater than 25 mm, a higher camouflaging effect on the molding defects appearing as projections and recesses is exhibited.

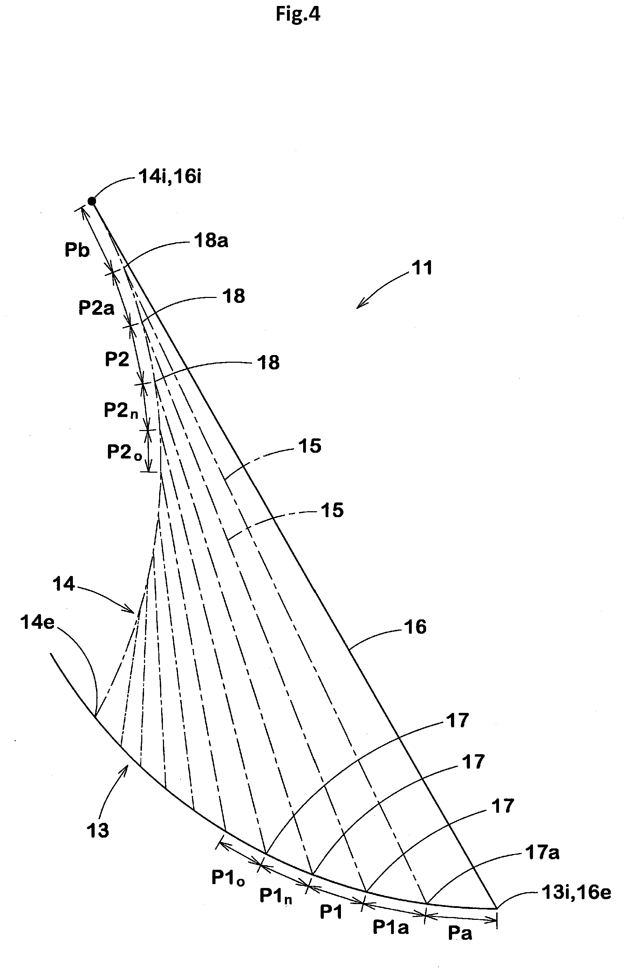

FIG. 4 is a plan view of the unit pattern 11. As shown in FIG. 4, each of the plurality of connecting rising portions 15 extends in a straight manner, for example. Such connecting rising portions 15 serve to improve the outer appearance of the unit pattern 11.

In each unit pattern 11, the plurality of connecting rising portions 15 extend non-parallel to each other in the present embodiment. Such connecting rising portions 15 have a significant effect of making the unit pattern 11 conspicuous, and thus further improve the outer appearance of the sidewall portion 3. In the present embodiment, in each unit pattern 11, the adjacent connecting rising portions 15 extend non-parallel to each other.

In each of the plurality of unit patterns 11, it is preferable that five or more connecting rising portions 15 are provided. Such a unit pattern 11 appropriately decreases the area of the reference surface 6 between the adjacent connecting rising portions 15 to enhance the effect of camouflaging molding defects such as bulges or dents formed on the reference surface 6. Although not particularly limited, in the unit pattern 11, the number of connecting rising portions 15 is further preferably not less than 7, and is preferably not greater than 13 and further preferably not greater than 11.

The plurality of connecting rising portions 15 include a plurality of second intersections 18 connected to the second rising portion 14. The respective second intersections 18 are separated from each other. Accordingly, at each second intersection 18, each of the plurality of connecting rising portions 15 is clearly distinguished, and occurrence of the molding defects appearing as projections and recesses is suppressed. In addition, the plurality of connecting rising portions 15 are arranged without intersecting each other. Such connecting rising portions 15 further effectively exhibit the above-described effect.

A first pitch P1 which is the distance between the adjacent first intersections 17 and a second pitch P2 which is the distance between the adjacent second intersections 18 are each preferably not less than 1.0 mm. Accordingly, since each of the plurality of connecting rising portions 15 is more clearly distinguished at each first intersection 17 and each second intersection 18, the outer appearance of the sidewall portion 3 is improved. If the first pitch P1 and the second pitch P2 are excessively large, when molding defects occur between the connecting rising portions 15, it may be impossible to camouflage the molding defects. Therefore, the first pitch P1 and the second pitch P2 are preferably not greater than 3 mm and further preferably not greater than 2.5 mm. The first pitch P1 is the shortest distance between the first intersections 17, 17. The second pitch P2 is the shortest distance between the second intersections 18, 18.

In each unit pattern 11, the first pitch P1 of the present embodiment becomes smaller toward the one end 14e. In addition, the second pitch P2 of the present embodiment becomes smaller toward the one end 14e. This gives the impression that the respective connecting rising portions 15 are neatly arranged toward the one end 14e, so that the outer appearance is improved. Furthermore, a first pitch P1a closest to the third rising portion 16 is smaller than a distance Pa between one end 16e of the third rising portion 16 and a first intersection 17a closest to the third rising portion 16. Similarly, a second pitch P2a closest to the third rising portion 16 is smaller than a distance Pb between another end 16i of the third rising portion 16 and a second intersection 18a closest to the third rising portion 16. Accordingly, the above-described effect is effectively exhibited.

The difference (P1n - P1o) between a certain first pitch P1n and a first pitch P1ο adjacent to the first pitch P1n on the one end 14e side is preferably 0.1 to 0.3 mm. In addition, the difference (P2n - P2o) between a certain second pitch P2n and a second pitch P2o adjacent to the second pitch P2n on the one end 14e side is preferably 0.1 to 0.3 mm. Accordingly, the above-described effect is effectively exhibited. In addition, the difference (Pa - P1a) between the distance Pa and the first pitch P1a and the difference (Pb - P2a) between the distance Pb and the second pitch P2a are preferably 0.1 to 0.3 mm.

As shown in FIG. 2, the decorative portion 10 includes a pattern group 12 composed of two or more adjacent unit patterns 11. The pattern group 12 of the present embodiment is composed of two unit patterns 11. The decorative portion 10 is formed by including, for example, a plurality of pattern groups 12 each composed of two unit patterns 11.

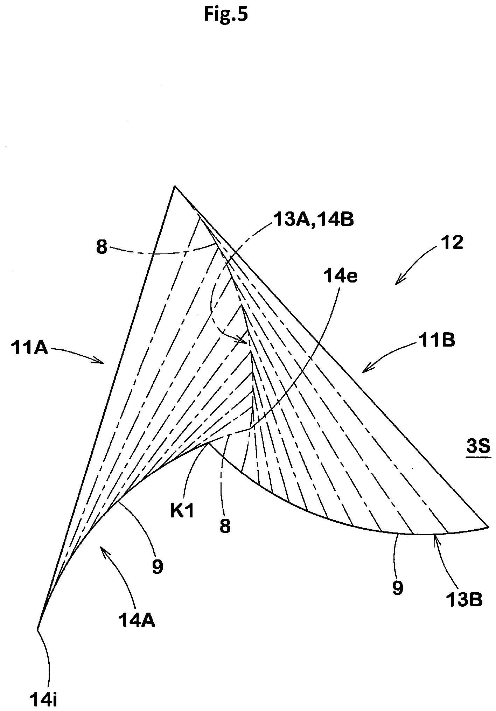

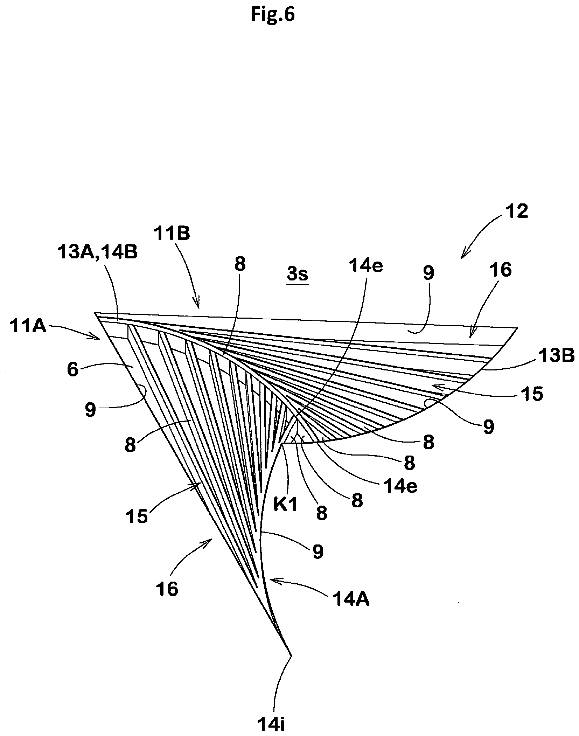

FIG. 5 is a plan view of one embodiment of the pattern group 12 in FIG. 2. FIG. 6 is a perspective view of the pattern group 12. As shown in FIG. 2, FIG. 5, and FIG. 6, in the pattern group 12, a first rising portion 13A of one unit pattern 11A and a second rising portion 14B of another unit pattern 11B adjacent thereto are superimposed so as to be shared with each other. Such unit patterns 11 can enhance the visibility of the decorative portion 10 and also can enhance the camouflaging effect of camouflaging molding defects. In the present specification, the one unit pattern is sometimes referred to as "first unit pattern", and the other unit pattern adjacent thereto is sometimes referred to as "second unit pattern".

In the pattern group 12 of the present embodiment, the first rising portion 13A of the first unit pattern 11A is formed by a ridge 8, and a second rising portion 14A of the first unit pattern 11A is formed by a ridge 8 and a wall surface 9. The second rising portion 14A of the first unit pattern 11A, for example, is formed by the wall surface 9 from the other end 14i to an intersection K1 between the second rising portion 14A and a first rising portion 13B of the second unit pattern 11B, and is formed by the ridge 8 between the intersection K1 and one end 14e of the second rising portion 14A. In addition, in the pattern group 12 of the present embodiment, the first rising portion 13B is formed by a wall surface 9, and the second rising portion 14B is formed by a ridge 8.

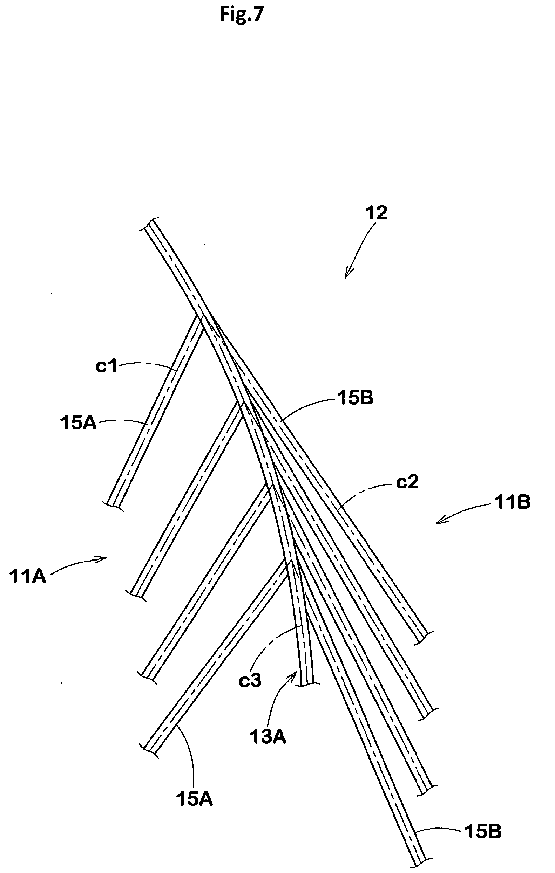

FIG. 7 is an enlarged view of the pattern group 12 in FIG. 5. As shown in FIG. 7, in the pattern group 12, for example, each of connecting rising portions 15A of the first unit pattern 11A is connected to the same position as any of connecting rising portions 15B of the second unit pattern 11B via the first rising portion 13A. Such a pattern group 12 further improves the outer appearance of the sidewall portion 3. The "connected at the same position" means that a center line c1 in the width direction of the connecting rising portion 15A and a center line c2 in the width direction of the connecting rising portion 15B intersect on a center line c3 in the width direction of the first rising portion 13A, and also includes a mode in which the center line c1 and the center line c2 intersect within the first rising portion 13A.

As shown in FIG. 3(A), the distance La in the direction of the normal line 6n of the reference surface 6 between the reference surface 6 and the sidewall reference profile 3s is preferably 0.5 to 0.7 mm. In other words, a projection height Hs of the wall surface 9 from the reference surface 6 (the same as the distance La) is preferably not less than 0.50 mm and further preferably not less than 0.55 mm, and is preferably not greater than 0.70 mm and further preferably not greater than 0.65 mm. In the present specification, the "projection height" is a length in the direction of the normal line 6n of the reference surface 6.

Furthermore, the projection height Hs of the wall surface 9 from the reference surface 6 is preferably larger than a projection height Ht of the ridge 8 from the reference surface 6. Accordingly, damage to the ridge 8 by protrusions such as curbstones on a road surface is suppressed. As a result, the outer appearance of the decorative portion 10 is further improved. If the projection height Ht of the ridge 8 is excessively small, the decorative portion 10 may become inconspicuous. In order to effectively exhibit such an effect, the projection height Ht of the ridge 8 is preferably not less than 0.40 mm and further preferably not less than 0.45 mm, and is preferably not greater than 0.60 mm and further preferably not greater than 0.55 mm.

In order to ensure high stiffness of the ridge 8, an angle θt of each side surface 8s with respect to the normal line 6n of the reference surface 6 is preferably not less than 10 degrees and further preferably not less than 12 degrees, and is preferably not greater than 20 degrees and further preferably not greater than 18 degrees.

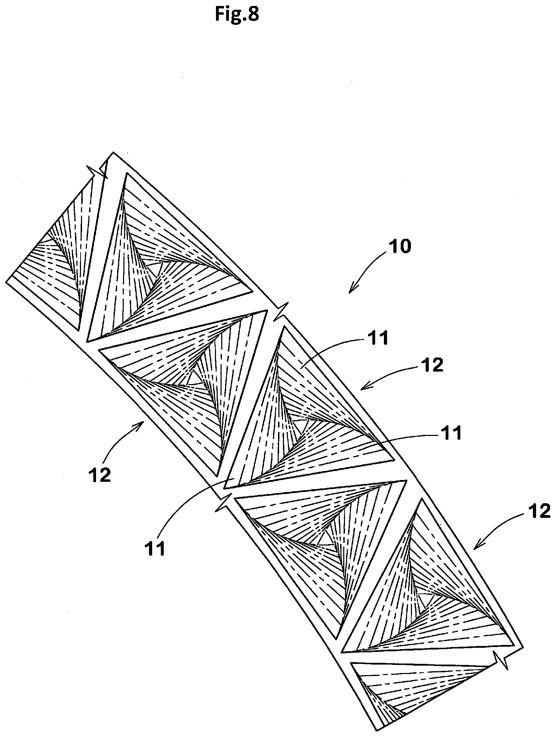

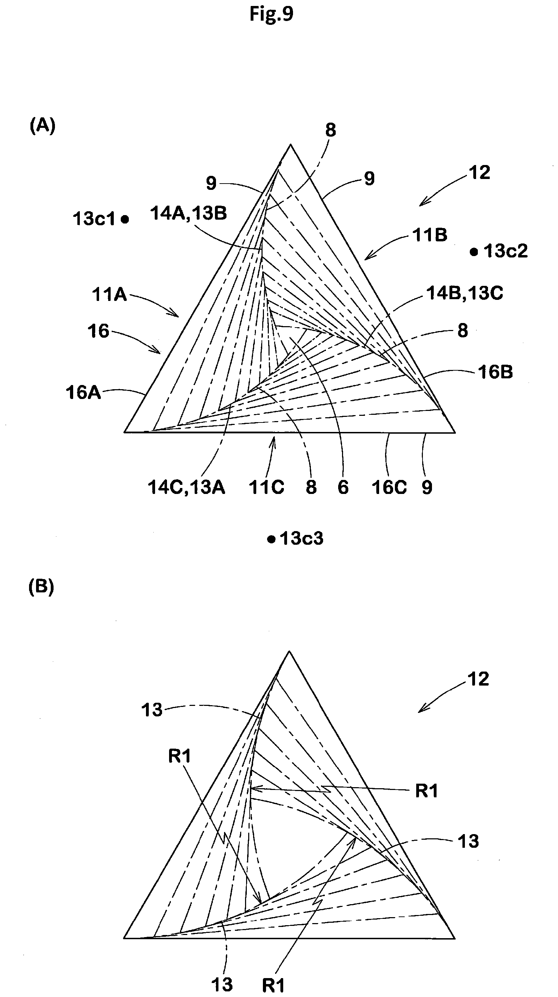

FIG. 8 is a plan view of a decorative portion 10 of another embodiment. FIG. 9(A) is a plan view of a pattern group 12 of the decorative portion 10 shown in FIG. 8. As shown in FIGS. 8 and 9(A), the pattern group 12 of the decorative portion 10 of this embodiment has a contour having a polygonal shape, specifically, a triangular shape. The pattern group 12 has a contour having a regular polygonal shape, specifically, an equilateral triangular shape. In this embodiment, each pattern group 12 is composed of three unit patterns 11. In the pattern group 12 of this embodiment, a second rising portion 14A of a first unit pattern 11A and a first rising portion 13B of a second unit pattern 11B are superimposed so as to be shared with each other. In addition, in the pattern group 12, for example, a second rising portion 14B of the second unit pattern 11B and a first rising portion 13C of a third unit pattern 11C are superimposed so as to be shared with each other. Furthermore, in the pattern group 12 of this embodiment, a second rising portion 14C of the third unit pattern 11C and a first rising portion 13A of the first unit pattern 1 1A are superimposed so as to be shared with each other. Such a pattern group 12 exhibits an effect of further camouflaging the molding defects appearing as projections and recesses. The respective first rising portions 13Ato 13C have the same shape.

In the pattern group 12 of this embodiment, three third rising portions 16 (16A to 16C) are formed by wall surfaces 9, and the respective first rising portions 13A to 13C or the respective second rising portions 14A to 14C are formed by ridges 8. In addition, a center of curvature 13c1 of the first rising portion 13A of the first unit pattern 11A, a center of curvature 13c2 of the first rising portion 13B of the second unit pattern 11B, and a center of curvature 13c3 of the first rising portion 13C of the third unit pattern 11C are located outside the contour of the pattern group 12.

FIG. 9(B) is a plan view of a pattern group 12 of still another embodiment. In the pattern group 12 in FIG. 9(B), each first rising portion 13 is formed with a larger radius of curvature R1 than in the pattern group 12 in FIG. 9(A).

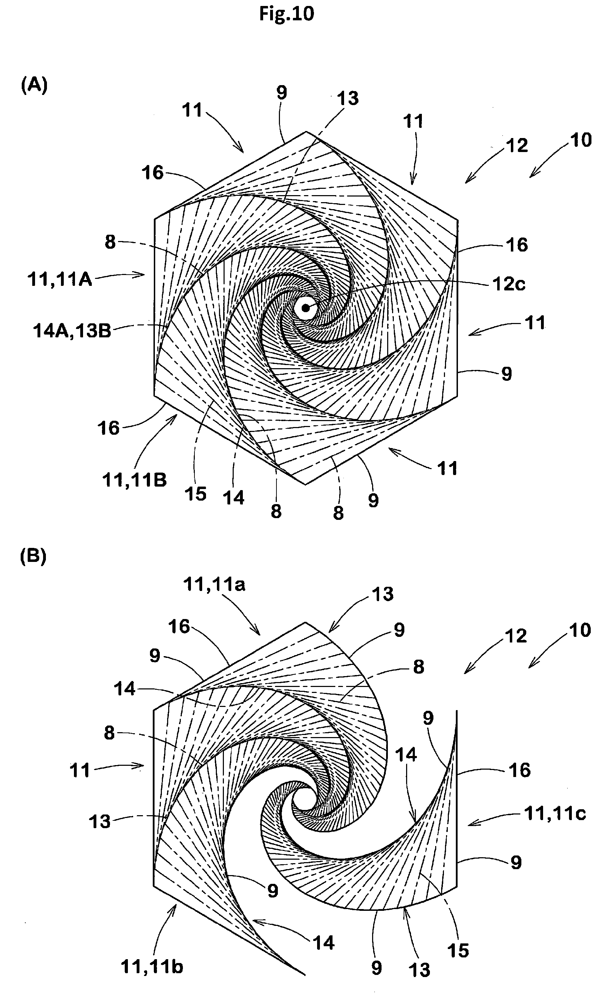

FIG. 10(A) is a plan view of a pattern group 12 of a decorative portion 10 of still another embodiment. As shown in FIG. 10(A), the pattern group 12 of this embodiment has a hexagonal contour. The pattern group 12 is formed by six unit patterns 11. In this embodiment, in each unit pattern 11, a first rising portion 13 and a second rising portion 14 extend in a spiral arc shape toward a centroid 12c of the pattern group 12. The first rising portion 13 and the second rising portion 14 are each, for example, an arc having a varying radius of curvature. In this embodiment, the radii of curvature of the first rising portion 13 and the second rising portion 14 continuously decrease from the third rising portion 16 side toward the centroid 12c.

In the pattern group 12 of this embodiment, six third rising portions 16 are formed by wall surfaces 9, and each first rising portion 13 or each second rising portion 14 is formed by a ridge 8. Furthermore, in the pattern group 12 of this embodiment, a second rising portion 14A of a first unit pattern 11A and a first rising portion 13B of a second unit pattern 11B are superimposed so as to be shared with each other.

FIG. 10(B) is a plan view of a pattern group 12 of a decorative portion 10 of still another embodiment. As shown in FIG. 10(B), the pattern group 12 of this embodiment is formed by four unit patterns 11. In this embodiment, in each unit pattern 11, as in FIG. 10(A), a first rising portion 13 and a second rising portion 14 extend in a spiral arc shape. In addition, in the pattern group 12 of this embodiment, wall surfaces 9 are formed by four third rising portions 16, the first rising portion 13 of one unit pattern 11a, the second rising portion 14 of another unit pattern 11b, and the first rising portion 13 and the second rising portion 14 of still another unit pattern 11c. Furthermore, in the pattern group 12 of this embodiment, ridges 8 are formed by the second rising portion 14 of the one unit pattern 11a and the first rising portion 13 of the other unit pattern 11b.

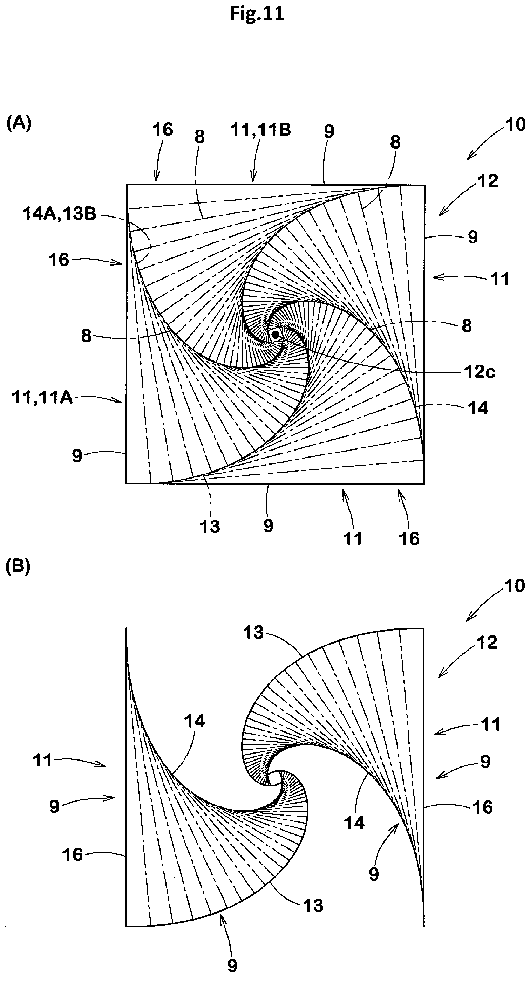

FIG. 11(A) is a plan view of a pattern group 12 of a decorative portion 10 of still another embodiment. As shown in FIG. 11(A), the pattern group 12 of this embodiment has a quadrangular contour. The pattern group 12 is formed by four unit patterns 11. In this embodiment, in each unit pattern 11, a first rising portion 13 and a second rising portion 14 extend in a spiral arc shape toward a centroid 12c of the pattern group 12. In addition, in the pattern group 12 of this embodiment, four third rising portions 16 are formed by wall surfaces 9. Each first rising portion 13 or each second rising portion 14 is formed by a ridge 8. In addition, in the pattern group 12, a second rising portion 14A of a first unit pattern 11A and a first rising portion 13B of a second unit pattern 11B are superimposed so as to be shared with each other.

FIG. 11(B) is a plan view of a pattern group 12 of a decorative portion 10 of still another embodiment. As shown in FIG. 11(B), the pattern group 12 of this embodiment is formed by two unit patterns 11. In this embodiment, in each unit pattern 11, as in FIG. 11(A), a first rising portion 13 and a second rising portion 14 extend in a spiral arc shape. In addition, in the pattern group 12 of this embodiment, wall surfaces 9 are formed by two third rising portions 16 and the first rising portion 13 and the second rising portion 14 of each unit pattern 11.

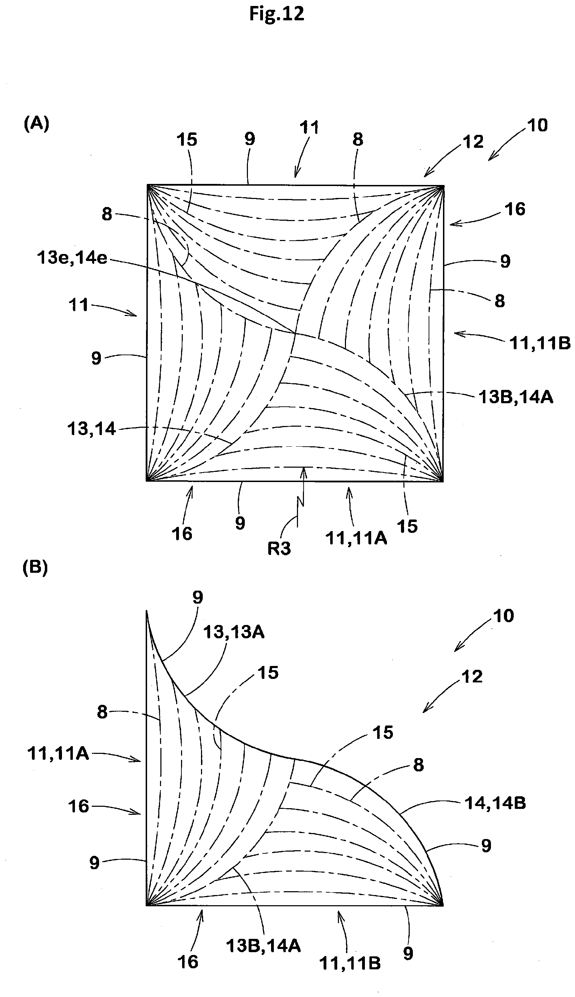

FIG. 12(A) is a plan view of a pattern group 12 of a decorative portion 10 of still another embodiment. As shown in FIG. 12(A), the pattern group 12 of this embodiment has a quadrangular contour. The pattern group 12 is formed by four unit patterns 11. In this embodiment, each unit pattern 11 is connected to an end 13e of a first rising portion 13 and an end 14e of a second rising portion 14. In addition, in the pattern group 12 of this embodiment, four third rising portions 16 are formed by wall surfaces 9, and each first rising portion 13 and each second rising portion 14 are formed by ridges 8. In addition, in the pattern group 12 of this embodiment, a second rising portion 14A of a first unit pattern 11A and a first rising portion 13B of a second unit pattern 11B are superimposed so as to be shared with each other. Furthermore, each of a plurality of connecting rising portions 15 extends in an arc shape. Each connecting rising portion 15 of each unit pattern 11 has a radius of curvature R3 decreasing in a direction away from the third rising portion 16.

FIG. 12(B) is a plan view of a pattern group 12 of a decorative portion 10 of still another embodiment. As shown in FIG. 12(B), the pattern group 12 of this embodiment is formed by two unit patterns 11. In this embodiment, in each unit pattern 11, a first rising portion 13 is formed in the same shape as a second rising portion 14. In addition, in the pattern group 12 of this embodiment, wall surfaces 9 are formed by two third rising portions 16, a first rising portion 13A of a first unit pattern 11A, and a second rising portion 14B of a second unit pattern 11B. In addition, in the pattern group 12 of this embodiment, a second rising portion 14A of the first unit pattern 11A and a first rising portion 13B of the second unit pattern 11B are superimposed so as to be shared with each other.

Although the particularly preferred embodiments of the present invention have been described in detail above, the present invention is not limited to the above-described embodiments, and various modifications can be made to implement the present invention.

### [Additional Note]

The present invention includes the following aspects.

### [Present Invention 1]

A tire including a pair of sidewall portions, wherein
a decorative portion having a plurality of unit patterns arranged therein is formed on at least one of the pair of sidewall portions,
each of the plurality of unit patterns includes a plurality of rising portions rising from a reference surface and each formed by a ridge or a wall surface,
the plurality of rising portions include a first rising portion extending in an arc shape, a second rising portion connected at one end thereof to the first rising portion and extending in an arc shape, and a plurality of connecting rising portions connecting the first rising portion and the second rising portion,
the plurality of connecting rising portions include a plurality of first intersections connected to the first rising portion and are each formed by the ridge, and
the plurality of first intersections are separated from each other.

### [Present Invention 2]

The tire according to Present Invention 1, wherein
the plurality of connecting rising portions include a plurality of second intersections connected to the second rising portion,
the second intersections are separated from each other, and
the plurality of connecting rising portions are arranged without intersecting each other.

### [Present Invention 3]

The tire according to Present Invention 1 or 2, wherein a first pitch which is a distance between the adjacent first intersections and a second pitch which is a distance between the adjacent second intersections are each not less than 1.0 mm.

### [Present Invention 4]

The tire according to any one of Present Inventions 1 to 3, wherein each of the plurality of connecting rising portions extends in a straight manner.

### [Present Invention 5]

The tire according to any one of Present Inventions 1 to 3, wherein each of the plurality of connecting rising portions extends in an arc shape.

### [Present Invention 6]

The tire according to any one of Present Inventions 1 to 5, wherein the plurality of connecting rising portions extend non-parallel to each other.

### [Present Invention 7]

The tire according to any one of Present Inventions 1 to 6, wherein each of the plurality of unit patterns includes a third rising portion connecting an end of the first rising portion and an end of the second rising portion.

### [Present Invention 8]

The tire according to Present Invention 3, wherein
the first pitch becomes smaller toward the one end, and
the second pitch becomes smaller toward the one end.

### [Present Invention 9]

The tire according to Present Invention 7, wherein
the first rising portion is curved so as to be convex in a direction away from the third rising portion, and
the second rising portion is curved so as to be convex toward the third rising portion.

### [Present Invention 10]

The tire according to any one of Present Inventions 1 to 9, wherein the first rising portion and the second rising portion are each an arc having a single radius of curvature.

### [Present Invention 11]

The tire according to Present Invention 10, wherein a radius of curvature R1 of the first rising portion is equal to a radius of curvature R2 of the second rising portion.

### [Present Invention 12]

The tire according to any one of Present Inventions 1 to 9, wherein the first rising portion and the second rising portion are each an arc having a varying radius of curvature.

### [Present Invention 13]

The tire according to any one of Present Inventions 1 to 12, wherein
the decorative portion includes a pattern group composed of the two or more adjacent unit patterns, and
in the pattern group, the second rising portion of one of the unit patterns and the first rising portion of another of the unit patterns adjacent thereto are superimposed so as to be shared with each other.

### [Present Invention 14]

The tire according to Present Invention 13, wherein the pattern group has a triangular contour.

### [Present Invention 15]

The tire according to any one of Present Inventions 1 to 14, wherein a projection height of the wall surface from a reference surface is larger than a projection height of the ridge from the reference surface.

## Claims

1. A tire (1) comprising a pair of sidewall portions (3), wherein
a decorative portion (10) having a plurality of unit patterns (11, 11A, 11B, 11C, 11a, 11b, 11c) arranged therein is formed on at least one of the pair of sidewall portions (3),
each of the plurality of unit patterns (11, 11A, 11B, 11C, 11a, 11b, 11c) includes a plurality of rising portions (7) rising from a reference surface and each formed by a ridge (8) or a wall surface (9),
the plurality of rising portions (7) include a first rising portion (13, 13A, 13B, 13C) extending in an arc shape, a second rising portion (14, 14A, 14B, 14C) connected at one end (14e) thereof to the first rising portion (13, 13A, 13B, 13C) and extending in an arc shape, and a plurality of connecting rising portions (15, 15A, 15B) connecting the first rising portion (13, 13A, 13B, 13C) and the second rising portion (14, 14A, 14B, 14C),
the plurality of connecting rising portions (15, 15A, 15B) include a plurality of first intersections (17) connected to the first rising portion (13, 13A, 13B, 13C) and are each formed by the ridge (8), and
the plurality of first intersections (17) are separated from each other.

2. The tire (1) according to claim 1, wherein
the plurality of connecting rising portions (15, 15A, 15B) include a plurality of second intersections (18) connected to the second rising portion (14, 14A, 14B, 14C),
the second intersections (18) are separated from each other, and
the plurality of connecting rising portions (15, 15A, 15B) are arranged without intersecting each other.

3. The tire (1) according to claim 1 or 2, wherein a first pitch (P1, P1a, P1n, P1o) which is a distance between the adjacent first intersections (17) and a second pitch (P2, P2a, P2n, P2o) which is a distance between the adjacent second intersections (18) are each not less than 1.0 mm.

4. The tire (1) according to any one of claims 1 to 3, wherein each of the plurality of connecting rising portions (15) extends in a straight manner.

5. The tire (1) according to any one of claims 1 to 3, wherein each of the plurality of connecting rising portions (15) extends in an arc shape.

6. The tire (1) according to any one of claims 1 to 5, wherein the plurality of connecting rising portions (15) extend non-parallel to each other.

7. The tire (1) according to any one of claims 1 to 6, wherein each of the plurality of unit patterns (11) includes a third rising portion (16) connecting an end (13i) of the first rising portion (13) and an end (14i) of the second rising portion (14).

8. The tire (1) according to claim 3, wherein
the first pitch (P1, P1a, P1n, P1o) becomes smaller toward the one end (14e), and
the second pitch (P2, P2a, P2n, P2o) becomes smaller toward the one end (14e).

9. The tire (1) according to claim 7, wherein
the first rising portion (13) is curved so as to be convex in a direction away from the third rising portion (16), and
the second rising portion (14) is curved so as to be convex toward the third rising portion (16).

10. The tire (1) according to any one of claims 1 to 9, wherein the first rising portion (13) and the second rising portion (14) are each an arc having a single radius of curvature (R1, R2).

11. The tire (1) according to claim 10, wherein a radius of curvature R1 of the first rising portion (13) is equal to a radius of curvature R2 of the second rising portion (14).

12. The tire (1) according to any one of claims 1 to 9, wherein the first rising portion (13) and the second rising portion (14) are each an arc having a varying radius of curvature.

13. The tire (1) according to any one of claims 1 to 12, wherein
the decorative portion (10) includes a pattern group (12) composed of the two or more adjacent unit patterns (11, 11A, 11B, 11C, 11a, 11b, 11c), and
in the pattern group (12), the second rising portion (14, 14A, 14B, 14C) of one of the unit patterns (11, 11A, 11B, 11C) and the first rising portion (13, 13A, 13B, 13C) of another of the unit patterns (11, 11A, 11B, 11C) adjacent thereto are superimposed so as to be shared with each other.

14. The tire (1) according to claim 13, wherein the pattern group (12) has a triangular contour.

15. The tire (1) according to any one of claims 1 to 14, wherein a projection height (Hs) of the wall surface (9) from a reference surface (6) is larger than a projection height (Ht) of the ridge (8) from the reference surface (6).
